Europäisches Patentamt

European Patent Office

Office européen des brevets

(19)

(11) Numéro de publication : **0 313 520 B1**

# (12) FASCICULE DE BREVET EUROPEEN

(45) Date de publication du fascicule du brevet :
**15.04.92 Bulletin 92/16**

(51) Int. Cl.$^5$ : **B60C 27/14, B60C 27/06**

(21) Numéro de dépôt : **88810720.8**

(22) Date de dépôt : **21.10.88**

(54) **Dispositif antidéparant pour roue de véhicule.**

(30) Priorité : **22.10.87 DE 3735827**

(43) Date de publication de la demande :
**26.04.89 Bulletin 89/17**

(45) Mention de la délivrance du brevet :
**15.04.92 Bulletin 92/16**

(84) Etats contractants désignés :
**AT BE CH DE ES FR GB GR IT LI LU NL SE**

(56) Documents cités :
**DE-A- 3 545 528**
**FR-A- 2 217 174**
**FR-A- 2 540 443**
**US-A- 4 234 028**

(73) Titulaire : **AUTOTYP S.A.**
**Case Postale 53 Route de Lausanne**
**CH-1037 Etagnières (CH)**

(72) Inventeur : **Metraux, Michel**
**Boulevard de la Forêt 23**
**CH-1009 Pully (CH)**

(74) Mandataire : **Dietlin, Henri**
**Dietlin & Cie S.A. Rue des Epinettes 19**
**CH-1227 Genève (CH)**

EP 0 313 520 B1

Jouve, 18, rue Saint-Denis, 75001 PARIS

**Description**

La présente invention est du domaine des dispositifs antidérapants pour roues et a plus particulièrement pour objet un ensemble du type de chaînes à neige pour roues de véhicules.

On a déjà proposé, dans le brevet français FR 2 540 443, d'utiliser une série de bras radiaux solidaires des éléments antidérapants et reliés entre eux par un anneau disposé à l'extérieur de la roue. Ce dispositif est plus particulièrement étudié pour éviter le déplacement des organes antidérapants par rapport au pneu.

On connaît aussi, par la publication allemande DE 35 45 528 de la déposante, des dispositifs antidérapants pour roues de véhicules destinés à être automatiquement mis en place grâce à des organes élastiques de maintien faisant passer le dispositif d'une position de montage sur le côté extérieur de la roue à une position de fonctionnement, dans laquelle une chaîne à neige est disposée sur la surface périphérique du pneu.

Dans les dispositifs antidérapants déjà connus de ce type, la chaîne à neige est maintenue par quatre bras susceptibles de subir une rotation par rapport aux organes de maintien fixés à la roue, au cours de l'avance du véhicule. Dans la plupart des cas, ces quatre bras sont suffisants pour tirer la chaîne comme prévu sur la roue et l'immobiliser solidement sur celle-ci pendant l'avance du véhicule.

On a néanmoins constaté que les quatre bras ne suffisaient pas toujours pour amener la chaîne à neige sur la roue et la maintenir sûrement sur celle-ci. Ce défaut est particulièrement fréquent dans le cas de roues de grand diamètre, par exemple des roues de véhicules poids-lourds car il est possible que la chaîne glisse entre les bras en dehors de la surface périphérique du pneu ou ne puisse être amenée dans sa position sur la surface périphérique du pneu sous l'action des organes de maintien.

L'invention a pour objet de pallier ces inconvénients et se propose d'assurer que la chaîne à neige puisse être amenée sur la roue comme prévu et reste au contact du pneu, même en cas de conduite rapide sur mauvaise route ou dans des conditions météorologiques particulièrement mauvaises, et ceci plus particulièrement pour des roues de grand diamètre, par exemple des roues de véhicules poids-lourds. Elle a en conséquence pour objet un dispositif antidérapant pour roue de véhicule comprenant au moins un ensemble antidérapant, amovible sur la périphérie du pneu de ladite roue et s'étendant sans discontinuité à la périphérie du pneu, et au moins un organe élastique de maintien, au moins indirectement solidaire de la jante de ladite roue et apte à la mise en place automatique de l'ensemble antidérapant sur la périphérie du pneu.

Ce dispositif est caractérisé par une pièce principale annulaire solidaire de l'ensemble antidérapant avec laquelle l'organe élastique de maintien coopère en autorisant un mouvement de rotation relatif entre la pièce annulaire et la jante.

Le dessin annexé représente, à titre d'exemples non limitatifs, quelques formes d'exécution de l'objet de la présente invention.

La figure 1 est une vue latérale d'une roue équipée d'un dispositif selon l'invention, dans une première forme d'exécution.

La figure 2 est une coupe partielle agrandie, selon II-II à la figure 1.

La figure 3 est une vue en perspective, montrant le dispositif de la figure 1 installé sur la roue d'un véhicule, en position de montage.

La figure 4 est une vue similaire à la figure 3, montrant le dispositif installé sur la roue du véhicule, en position de fonctionnement.

La figure 5 est une vue latérale partielle d'une roue équipée d'un dispositif selon l'invention, dans une seconde forme d'exécution, schématisant une variante de fixation au moyen d'organes de maintien disposés entre un anneau principal et des goujons de fixation de la roue.

La figure 6 est une coupe selon VI-VI à la figure 5.

La figure 7 est une vue similaire à la figure 5, montrant une variante de fixation sur le rebord de la jante.

La figure 8 est une coupe selon VIII-VIII à la figure 7.

La figure 9 est une vue latérale partielle d'une roue équipée d'un dispositif selon l'invention, dans une troisième forme d'exécution, schématisant une variante de fixation au moyen d'organes élastiques de maintien disposés entre un anneau supplémentaire solidaire de l'anneau principal et les goujons de la roue.

La figure 10 est une coupe selon X-X à la figure 9.

La figure 11 est une coupe partielle similaire à la figure 10, dans une nouvelle forme d'exécution avec fixation de l'anneau supplémentaire sur le rebord de la jante, les organes de maintien étant disposés entre un bras et l'anneau supplémentaire.

La figure 12 est une vue similaire à la figure 11, montrant une variante avec organes de maintien disposés entre les anneaux principal et supplémentaire.

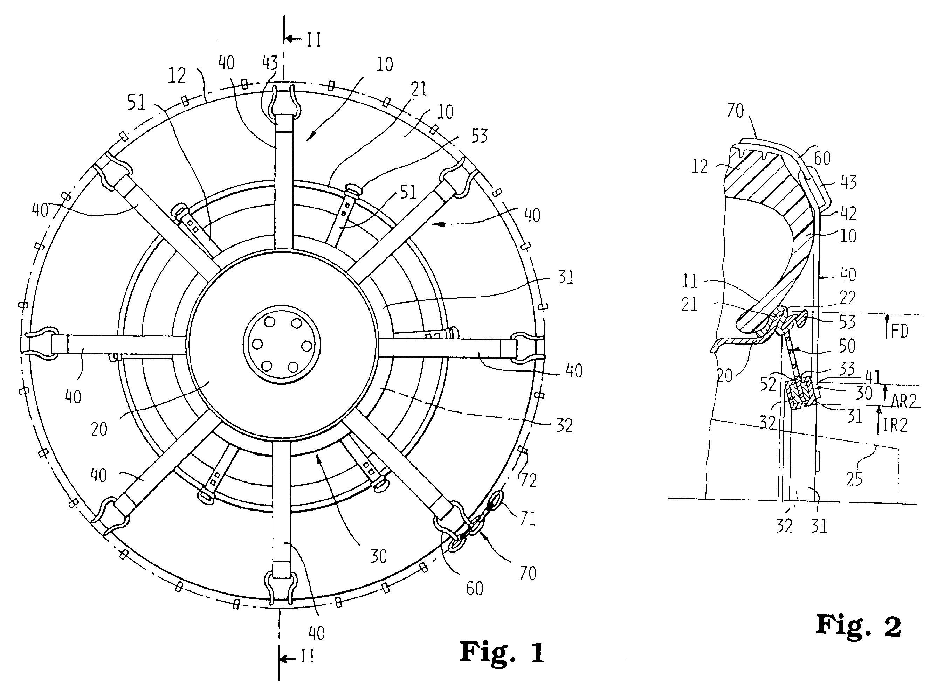

Dans la première forme d'exécution des figures 1 à 4, le dispositif antidérapant selon l'invention est disposé sur une roue du véhicule, schématisée par un pneu 10 et une jante 20. Les dimensions de l'anneau principal 30 sont telles que son diamètre extérieur AR2 est inférieur au diamètre FD du bord 21 de la jante 20 supportant le pneu 10, tandis que son diamètre intérieur IR2 est supérieur au diamètre du moyeu 25, schématisé en traitillés à la figure 2, ce qui permet d'utiliser le système selon l'invention même dans le cas où le moyeu 25 de la roue déborde vers l'extérieur, comme représenté au dessin.

Comme visible à la figure 2, l'anneau principal 30 est constitué de deux anneaux 31 et 32, de sections concentriques, pouvant tourner l'un par rapport à l'autre. L'anneau extérieur 31 est destiné à coopérer avec les bras radiaux 40 s'étendant en direction de la périphérie de la roue tandis que l'anneau intérieur 32 est destiné à coopérer avec les organes élastiques 50 de maintien du dispositif. Il va de soi que les dimensions des anneaux sont fonction de la charge et du poids total autorisé en charge du véhicule concerné.

Dans la variante représentée à la figure 1, on a représenté huit bras radiaux 40, dont une extrémité centrale 41 est fixée, par soudure par exemple, à l'anneau extérieur 31 tandis que l'extrémité extérieure 42 est recourbée pour former un oeillet 43 destiné à recevoir une boucle de guide-chaîne 60. Les guide-chaînes 60 sont insérés le long du chemin de roulement 70, constitué de façon conventionnelle par des chaînes 71 et des barrettes transversales 72 qui, lorsque le dispositif est en place, entourent la surface périphérique 12 du pneu. On remarquera que les bras radiaux 40 sont profilés de manière à épouser la forme extérieure générale du pneu.

En variante, on pourrait envisager d'installer directement des éléments de la chaîne à neige 71 sur l'anneau extérieur 31.

Au dessin, on a représenté six organes de maintien 50, qui sont de préférence régulièrement répartis sur le pourtour de l'anneau secondaire 32. Ces organes sont par exemple constitués par des tendeurs élastiques 51, dont une extrémité 52 est pincée dans l'anneau intérieur 32 et dont l'autre extrémité 53 est fixée d'autre part dans des crochets 22, en forme générale de S, pincés entre le rebord 21 de la jante 20 et la partie adjacente 11 du pneu 10. Ces organes élastiques de maintien sont destinés à tirer la pièce annulaire 30 en direction de la roue.

En variante, on peut utiliser un organe de maintien en une pièce unique en forme d'étoile, dont la partie centrale constitue l'anneau intérieur 32.

Comme on l'a déjà mentionné, lorsque le véhicule est en mouvement, il y a un déplacement du chemin de roulement 70 par rapport à la surface périphérique 12 du pneu et c'est la raison pour laquelle il est nécessaire d'assurer un mouvement relatif entre les deux anneaux 31 et 32. Notons encore que l'anneau extérieur 31 présente une ouverture annulaire 33, destinée au passage des tendeurs élastiques 51.

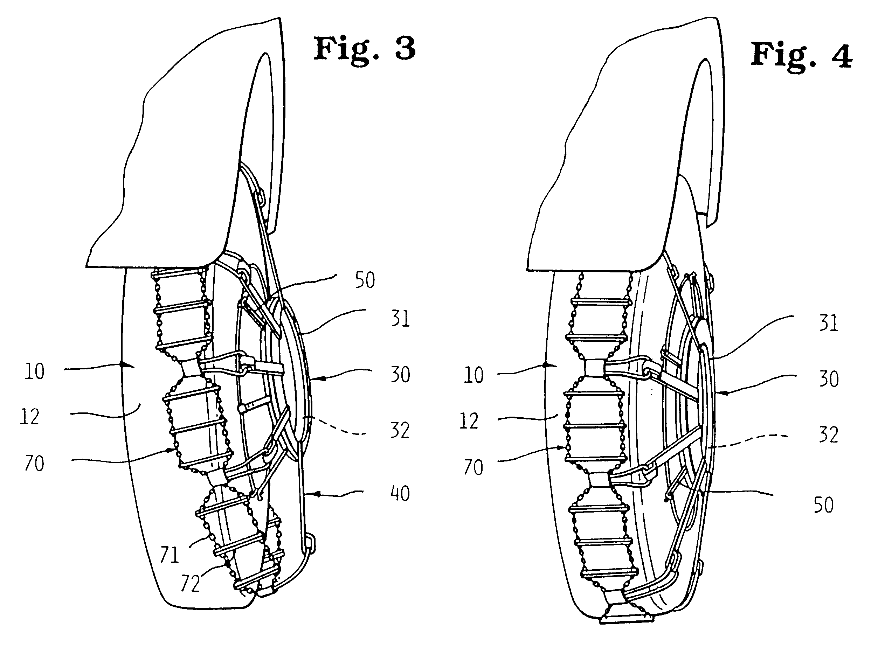

Les figures 3 et 4 représentent le processus de montage du dispositif des figures 1 et 2. Le chemin de roulement 70 du dispositif antidérapant est tout d'abord disposé sur la partie supérieure de la périphérie 12 du pneu 10 tandis qu'il repose dans sa partie basse vers la chaussée, au voisinage de la partie du pneu en contact avec le sol. On solidarise alors le dispositif avec la roue à équiper, au moyen des organes de maintien 50 venant en prise avec les crochets 22 préalablement insérés entre le rebord 21 de la jante 20 et la partie adjacente 11 du pneu 10. Dès que tous les organes élastiques de maintien sont fixés, ils tirent le dispositif en direction de la roue.

En faisant avancer le véhicule, on libre la portion du pneu préalablement en contact avec le sol, et après quelques tours de roue le dispositif anti-dérapant est disposé sur toute la surface périphérique du pneu, comme représenté à la figure 4. Il est maintenu dans cette position grâce aux organes de maintien 50, aussi bien à l'arrêt que durant la rotation de la roue.

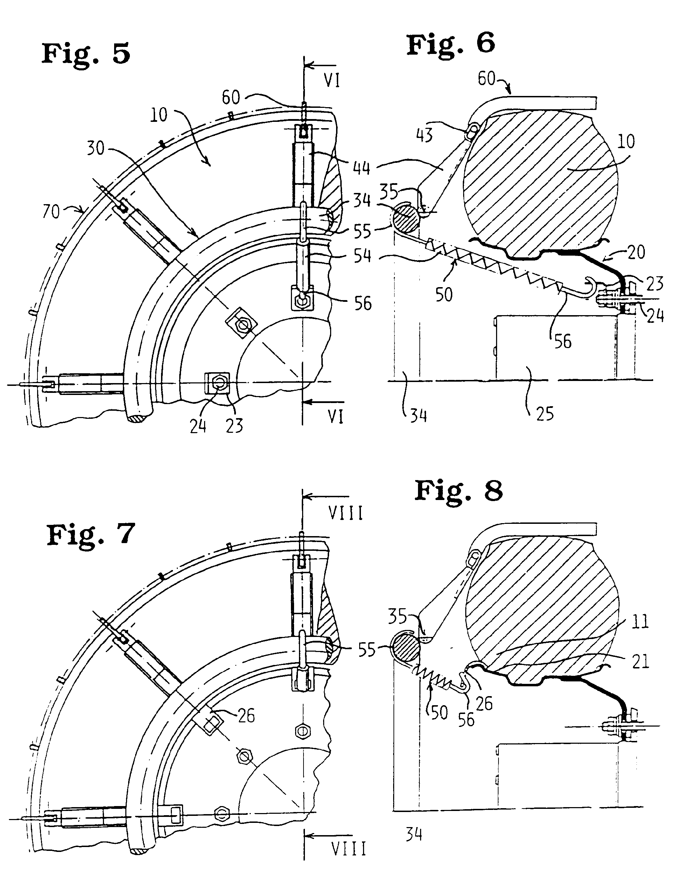

Dans les formes d'exécution représentéees aux figures 5 à 12, on retrouve le pneu 10, la jante 20, le moyeu 25, les guide-chaîne 60 et le chemin de chaîne 70, tels que décrits précédemment.

Aux figures 5 à 8, on a un anneau principal 30 constitué par une pièce annulaire unique 34 comportant à intervalles réguliers des axes 35 de fixation des bras radiaux 44. Comme on l'a mentionné précédemment, chaque bras 44 est muni, dans sa partie extérieure, d'une boucle 43 autorisant l'articulation du guide-chaîne 60. De plus, chaque bras 44 peut pivoter autour d'un axe 35 correspondant, fixé à la pièce annulaire 34, de manière à être replié à l'intérieur de la pièce annulaire 34 en dehors de l'utilisation, pour permettre un rangement de l'ensemble dans un volume réduit.

Dans les figures 5 à 12, l'organe de maintien 50 est constitué plus précisément de tendeurs élastiques 54 dont une des extrémité présente un crochet 55 dont la forme correspond à la section de l'anneau sur lequel il est accroché et le long duquel il peut se déplacer librement.

L'autre extrémité du tendeur 54 comporte également un crochet 56, destiné, dans la variante des figures 5 et 6 à être fixé sur une plaquette en équerre 23, insérée une fois pour toutes dans les goujons 24 de fixation de la roue.

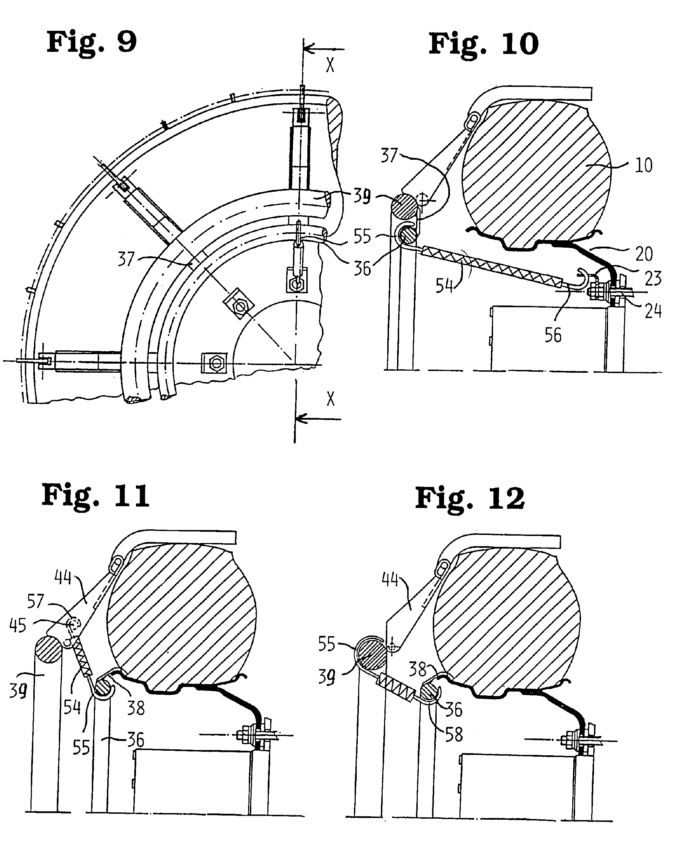

Dans la variante des figures 7 et 8, l'organe de maintien 50 comporte aussi un crochet intérieur 56, destiné à la fixation sur des supports 26, insérés à des emplacements prédéterminés et régulièrement espacés entre le rebord 21 de la jante et la partie adjacente 11 du pneu. Comme précédemment, le crochet 55 est dimensionné et positionné de manière à pouvoir se déplacer librement le long du pourtour de la pièce annulaire 39.

La forme d'exécution présentée dans les figures 9 à 12, comporte en plus de la pièce annulaire 39 précédemment mentionnée, un anneau supplémentaire 36, centré sur le même axe que la pièce annulaire 39.

Dans la variante des figures 9 et 10, le tendeur élastique 54 présente à l'une de ses extrémités un crochet 55 dont la forme correspond à la section de l'anneau supplémentaire 36 sur lequel il est accroché et le long duquel il peut se déplacer librement, ainsi qu'on l'a déjà vu précédemment. Son autre extrémité comporte un crochet 56 assurant la fixation à une plaquette 23 insérée dans les goujons 24 de fixation de la roue. L'anneau supplémentaire 36 est rendu solidaire de la pièce annulaire 39 au moyen d'éléments de liaison 37 fixés par soudure par exemple en différents points de la circonférence des pièces annulaires. Dans une variante non représentée, on pourrait prévoir de fixer ce crochet 56 dans des supports insérés entre le rebord de la jante et le pneu.

Dans la variante représentée à la figure 11, l'anneau supplémentaire 36 est fixé à la jante au moyen d'éléments de liaison 38 insérés entre le rebord 21 de la jante et la partie adjacente 11 du pneu. Le tendeur élastique 54 comporte à une extrémité un crochet arrondi 55 épousant la forme de l'anneau supplémentaire 36, le long duquel il peut glisser. Son autre extrémité comporte un crochet 57 destiné à la fixation au bras 44, muni à cet effet d'une goupille 45 par exemple.

Dans la dernière variante proposée à la figure 12, on a une pièce annulaire 39 portant des bras radiaux 44 et un anneau supplémentaire 36, fixés par soudure par exemple à des éléments 38 de liaison avec le rebord 21 de la jante. Les deux extrémités du tendeur 54 sont munies de crochets arrondis 55 et 58, destinés tous deux à glisser respectivement le long de la pièce annulaire 39 et de l'anneau supplémentaire 36.

Il va sans dire que l'on peut prévoir de fixer l'anneau 36 des variantes des figures 11 et 12 en d'autres points de la jante, par exemple dans les goujons de fixation de la roue.

Dans la plupart des variantes données au dessin, la pièce annulaire est de section circulaire. On pourrait également envisager de réaliser une pièce annulaire emboutie, présentant en coupe une partie en arc de cercle constituant une nervure annulaire, le long de laquelle les organes de maintien pourraient coulisser.

De manière générale, la plupart des pièces constitutives du dispositif décrit sont métalliques, telles les pièces annulaires, les bras radiaux, les guide-chaîne et les plaquettes et crochets de fixation. Les organes de maintien comportent une partie en matière élastomère ou, dans une variante non représentée au dessin, un ressort boudin métallique.

## Revendications

1. Dispositif antidérapant pour roue de véhicule comprenant au moins un ensemble antidérapant (70), amovible sur la périphérie du pneu de ladite roue et s'étendant sans discontinuité à la périphérie du pneu, et au moins un organe élastique de maintien (50; 51, 54), au moins indirectement solidaire de la jante (20) de ladite roue et apte à la mise en place automatique de l'ensemble antidérapant sur la périphérie du pneu, caractérisé par une pièce principale annulaire (30; 31; 34; 39,36) solidaire de l'ensemble antidérapant avec laquelle l'organe élastique de maintien (50; 51; 54) coopère en autorisant un mouvement de rotation relatif entre la pièce annulaire et la jante.

2. Dispositif antidérapant selon la revendication 1, caractérisé par plusieurs bras radiaux (40) disposés à intervalles réguliers entre l'ensemble antidérapant (70) et la pièce annulaire (30).

3. Dispositif antidérapant selon la revendication 2, caractérisé par le fait que lesdits bras radiaux sont au nombre de 8.

4. Dispositif antidérapant selon la revendication 2, caractérisé par le fait que lesdits bras sont fixés sur la pièce annulaire.

5. Dispositif antidérapant selon la revendication 2, caractérisé par le fait que lesdits bras sont articulés par rapport à la pièce annulaire.

6. Dispositif antidérapant selon la revendication 2, caractérisé par des éléments (60) de guide-chaîne insérés dans l'ensemble antidérapant et solidaires des bras radiaux (40).

7. Dispositif antidérapant selon la revendication 1, caractérisé par le fait que l'organes élastique de maintien est agencé pour se fixer dans des ouvertures pratiquées dans la jante.

8. Dispositif antidérapant selon la revendication 1, caractérisé par des supports (22, 26) pincés entre la jante et le pneu, aptes à la fixation de l'organe élastique de maintien.

9. Dispositif antidérapant selon la revendication 8, caractérisé par le fait que lesdits supports sont en forme de S.

10. Dispositif antidérapant selon la revendication 1, caractérisé par des plaquettes (23), serrées dans les goujons de maintien de la roue et aptes à la fixation de l'organe de maintien.

11. Dispositif antidérapant selon la revendication 10, caractérisé par le fait que lesdites plaquettes sont en forme d'équerre.

12. Dispositif antidérapant selon la revendication 1, caractérisé par un anneau secondaire (32, 36), centré sur le même axe que celui de ladite pièce annulaire principale.

13. Dispositif antidérapant selon la revendication 12, caractérisé par des éléments de fixation soudés (37) à l'anneau secondaire et aptes à le solidariser avec la pièce annulaire principale.

14. Dispositif antidérapant selon la revendication 12, caractérisé par des éléments de fixation (38) soudés à l'anneau secondaire et aptes à le solidariser avec la jante.

15. Dispositif antidérapant selon la revendication 1, caractérisé par le fait que la pièce principale annulaire présente en coupe un dégagement central prolongé par une ouverture annulaire extérieure (33) pour le passage dudit organe de maintien.

16. Dispositif antidérapant selon la revendication 1, caractérisé par un organe de maintien en étoile sur une pièce secondaire annulaire.

17. Dispositif antidérapant selon les revendications 15 et 16, caractérisé par le fait que ladite pièce secondaire annulaire est montée dans ledit dégagement central.

18. Dispositif antidérapant selon la revendication 1, caractérisé par plusieurs organes de maintien (51) régulièrement espacés angulairement.

19. Dispositif antidérapant selon la revendication 16 ou 18, caractérisé par le fait que chaque organe de maintien comporte une partie déformable élastiquement prolongée au moins d'un côté par une partie recourbée en crochet.

20. Dispositif antidérapant selon la revendication 19, caractérisé par le fait que lesdits organes de maintien sont de préférence au nombre de 6.

21. Dispositif antidérapant selon les revendications 9 et 19, caractérisé par le fait que lesdits crochets (53, 56) sont aptes à être fixés dans lesdits supports (22).

22. Dispositif antidérapant selon les revendications 10 et 19, caractérisé par le fait que lesdits crochets (56) sont aptes à être fixés dans lesdites plaquettes (23).

23. Dispositif antidérapant selon les revendications 2 et 19, caractérisé par le fait que lesdits crochets (57) sont aptes à être fixés sur les dits bras radiaux.

24. Dispositif antidérapant selon la revendication 19, caractérisé par le fait que lesdits crochets (55. 58) épousent la forme de la section de la pièce annulaire, de manière à assurer la rotation des organes de maintien par rapport à la pièce annulaire.

**Patentansprüche**

1. Gleitschutzvorrichtung für Fahrzeugräder, umfassend zumindest ein auf der Peripherie des Pneus des besagten Rades demontierbar vorgesehenes Gleitschutzensemble (70), das sich ohne Unterbrechung auf der Peripherie des Pneus erstreckt und zumindest ein elastisches Halteorgan (50;51,54), das zumindest indirekt mit der Felge (20) des genannten Rades verbunden ist und fähig ist, das Gleitschutzensemble automatisch auf der Peripherie des Pneus zu plazieren, gekennzeichnet durch einen im Prinzip kreisförmigen Teil (30;31;34;39,36), der mit dem Gleitschutzensemble verbunden ist, mit dem das elastische Halteorgan (50,51,54) zusammenwirkt und dabei eine relative Drehwegung zwischen dem Kreisteil und der Felge zuläßt.

2. Gleitschutzvorrichtung nach Anspruch 1, gekennzeichnet durch mehrere Radialarme (40), die in regelmäßigen Intervallen zwischen dem Gleitschutzensemble (70) und dem Ringteil (30) angeordnet sind.

3. Gleitschutzvorrichtung nach Anspruch 2, dadurch gekennzeichnet, daß acht Radialarme vorgesehen sind.

4. Gleitschutzvorrichtung nach Anspruch 2, dadurch gekennzeichnet, daß die Arme am Ringteil fixiert sind.

5. Gleitschutzvorrichtung nach Anspruch 2, dadurch gekennzeichnet, daß die Arme bezüglich des Ringteils gelenkig sind.

6. Gleitschutzvorrichtung nach Anspruch 2, gekennzeichnet durch Führungskettenelemente (60), die im Gleitschutzensemble eingeführt und mit den radialen Armen (40) verbunden sind.

7. Gleitschutzvorrichtung nach Anspruch 1, dadurch gekennzeichnet, daß das elastische Halteorgan so angeordnet ist, daß es sich in Öffnungen, die in der Felge vorgesehen sind, fixiert.

8. Gleitschutzvorrichtung nach Anspruch 1, gekennzeichnet durch Stützen (22,26), die zwischen der Felge und dem Pneu eingeklemmt sind und die Befestigung des elastischen Halteorgans bewirken.

9. Gleitschutzvorrichtung nach Anspruch 8, dadurch gekennzeichnet, daß die genannten Stützen S-Form haben.

10. Gleitschutzvorrichtung nach Anspruch 1, gekennzeichnet durch Platten (23), die an den Haltebolzen des Rades angeklemmt sind und die Befestigung der Halteorgane bewirken.

11. Gleitschutzvorrichtung nach Anspruch 10, dadurch gekennzeichnet, daß die Platten rechtwinkelige Form haben

12. Gleitschutzvorrichtung nach Anspruch 1, gekennzeichnet durch einen Sekundärring (32,36), der auf der gleichen Achse zentriert ist, wie der genannte Hauptringteil.

13. Gleitschutzvorrichtung nach Anspruch 12, gekennzeichnet durch am Sekundärring angeschweißte Befestigungselemente (37), die mit dem Hauptringteil verbindbar sind.

14. Gleitschutzvorrichtung nach Anspruch 12, gekennzeichnet durch am Sekundärring angeschweißte Befestigungselemente (38), die in der Lage sind, mit der Felge verbunden zu werden.

15. Gleitschutzvorrichtung nach Anspruch 1, dadurch gekennzeichnet, daß der Hauptringteil im Schnitt eine zentrale Ausnehmung aufweist, die durch eine äußere ringförmige Öffnung (33) verlängert ist, zum Durchtritt der genannten Haltemittel.

16. Gleitschutzvorrichtung nach Anspruch 1, gekennzeichnet durch ein sternförmiges Halteorgan auf einem Sekundärringteil.

17. Gleitschutzvorrichtung nach den Ansprüchen 15 und 16, dadurch gekennzeichnet, daß der Sekundärringteil in der zentralen Ausnehmung montiert ist.

18. Gleitschutzvorrichtung nach Anspruch 1, gekennzeichnet durch mehrere gleichmäßigen Winkelabstand aufweisende Halteorgane (51).

19. Gleitschutzvorrichtung nach Anspruch 16 oder 18, dadurch gekennzeichnet, daß jedes Halteorgan einen elastisch deformierbaren Teil aufweist, der auf zumindest einer Seite durch einen hakenförmig gebogenen Teil verlängert ist

20. Gleitschutzvorrichtung nach Anspruch 19, dadurch gekennzeichnet, daß bevorzugt sechs Halteorgane vorgesehen sind.

21. Gleitschutzvorrichtung nach den Ansprüchen 9 und 19, dadurch gekennzeichnet, daß die Haken (53,56) in den Stützen (22) befestigbar sind.

22. Gleitschutzvorrichtung nach den Ansprüchen 10 und 19, dadurch gekennzeichnet, daß die Haken (56) in den Platten (23) befestigbar sind.

23. Gleitschutzvorrichtung nach den Ansprüchen 2 und 19, dadurch gekennzeichnet, daß die Haken (57) in den Radialarmen befestigbar sind.

24. Gleitschutzvorrichtung nach Anspruch 19, dadurch gekennzeichnet, daß die Haken (55,58) die Form des Abschnittes des Ringteiles haben, um so die Rotation der Haltemittel bezüglich des Ringteiles zu sichern.

**Claims**

1. An antiskid device for a vehicle wheel comprising at least an antiskid means (70) movable over the periphery of the wheel tire and extending without any discontinuity over the periphery of the tire, and at least a resilient securing member (50; 51,54), which is at least indirectly integral with the wheel rim (20) and is capable of positioning the antiskid means over the periphery of the tire, characterized by a principal annular member (30; 31; 34; 39,36) bearing the antiskid means and cooperating with the resilient securing member (50;51;54) while ensuring a relative rotational movement between the annular member and the rim.

2. An antiskid device according to claim 1, characterized by a plurality of radial arms (40) arranged at regular intervals between the antiskid means (70) and the annular member (30).

3. An antiskid device according to claim 2, characterized by the fact that said radial arms are eight in number.

4. An antiskid device according to claim 2, characterized by the fact that said radial arms are fixed on the annular member.

5. An antiskid device according to claim 2, characterized by the fact that said arms are articulated relative to the annular member.

6. An antiskid device according to claim 2, characterized by chain guide elements (60) inserted in the antiskid means and cooperating with the radial arms (40).

7. An antiskid device according to claim 1, characterized by the fact that the resilient securing member is fixed in apertures disposed in the wheel rim.

8. An antiskid device according to claim 1, characterized by supports (22,26) pinched between the rim and the tire, intended to receive the resilient securing member.

9. An antiskid device according to claim 8, characterized by the fact that said supports are S-shaped.

10. An antiskid device according to claim 1, characterized by plates (23), attached within the bolts fixing the wheel and intended to receive the securing member.

11. An antiskid device according to claim 10, characterized by the fact that said plates are L-shaped.

12. An antiskid device according to claim 1, characterized by a supplementary hoop (32,36) centered about the same axis as the principal annular member.

13. An antiskid device according to claim 12, characterized by connecting elements (37) fixed on the supplementary hoop and intended to couple it with the principal annular member.

14. An antiskid device according to claim 12, characterized by connecting elements (38) fixed on the supplementary hoop and intended to couple it with the rim.

15. An antiskid device according to claim 1, characterized by the fact that the principal annular member possesses in section a central opening ending in an annular aperture (33) intended for the passage of said securing member.

16. An antiskid device according to claim 1, characterized by a star-shaped securing member fixed on a supplementary annular hoop.

17. An antiskid device according to claims 15 and 16, characterized by that fact that said supplementary annular hoop is disposed in said central opening,

18. An antiskid device according to claim 1, characterized by a plurality of securing members (51) spaced at regular angular distances.

19. An antiskid device according to claim 16 or 16, characterized by the fact that each securing member includes an elastically deformable part terminating at least on one side into a curved hook.

20. An antiskid device according to claim 19, characterized by the fact that said securing members are six in number.

21. An antiskid device according to claims 9 and 19, characterized by the fact that said hooks (53,56) are received in said supports (22).

22. An antiskid device according to claims 10 and 19, characterized by the fact that said hooks ((56) are received in said plates (23).

23. An antiskid device according to claims 2 and 19, characterized by the fact that said hooks (57) are received in said radial arms.

24. An antiskid device according to claim 19, characterized by the fact that the shape of said hooks (55,58) corresponds to the section of the annular member, to ensure the free rotation of the securing members relative the annular member.

Fig. 2

Fig. 1

Fig. 3

Fig. 4

EP 0 313 520 B1

# Fig. 5

# Fig. 6

# Fig. 7

# Fig. 8

Fig. 9

Fig. 10

Fig. 11

Fig. 12